# EUROPEAN PATENT SPECIFICATION

(11) **EP 0 334 829 B1**
(45) Date of publication and mention of the grant of the patent: **24.08.1994**
(21) Application number: 89870030.7
(22) Date of filing: 20.02.1989
(51) Int. Cl.: C08L 23/10, C08K 5/14, C08F 8/50

(54) **Process for the treatment of polypropylene**
Verfahren zur Polypropylen-Behandlung
Procédé de traitement de polypropylène

(30) Priority: 19.02.1988 FR 8802018
(43) Date of publication of application: 27.09.1989
(73) Proprietor: FINA RESEARCH S.A., B-7181 Seneffe (Feluy) (BE); POLYTECHS S.A., 76450 Cany-Barville (FR)
(72) Inventor: Palate, Claude, I-44100 Ferrara (IT); Prevot, Alain Michel François, F-76400 Fecamp (FR); Venneman, René, B-6269 Aisleau-Preste (BE)
(74) Representative: Leyder, Francis

(56) References cited:
- DE-A- 2 311 882
- GB-A- 2 100 268

## Description

The present invention relates to a process for the treatment of polypropylene with products which are degraded by heat, in order to form polypropylene pellets containing said thermosensitive agent substantially unaffected.

The present invention also relates to a process for treating polypropylene so as to incorporate therein an important amount of said type of agent.

More particularly, the present invention relates to a process for the treatment of polypropylene in order to improve its ability to form fibres.

In addition to applications in the field of fibres, polypropylene treated according to the process of the present invention can also be used in other applications such as injection or even for the preparation of compounds.

It is well known that the ability to form fibres can be achieved with a polypropylene having a narrow molecular weight distribution. Generally, very high molecular weight polypropylene are produced, that are then degraded chemically or thermally to a certain extent, thus reducing the molecular weight distribution while at the same time reducing the weight average molecular weight.

Polypropylene is degraded chemically by addition of compounds that decompose into forming free radicals. Chemical stabilizers added to polypropylene to enhance end-use stability may interfere with free radical generators.

However, it has been found that some free radical generator types of chemicals, such as for example the specific types of organic peroxides described in British Patent n^{o} 1,442,681, are minima lly affected by commonly used stabilizers and are thus preferred prodegradants.

The degree to which the polymer can be degraded is however limited by the inability of the polymer producer to form pellets from polymers of very low viscosity. Said very low viscosities are however necessary in order either to enhance the productivity of extrusion equipment for ultra-fine fibres, or to obtain fibres with specific mechanical characteristics.

Therefore, the polypropylene processor manufacturing films and fibres faces the problem of having to use a polypropylene not optimally suited for these applications. Thus, a need has been demonstrated for a polymer having high viscosity properties for pelletizing purposes, and low viscosity properties for end use processing purposes.

It has already been suggested that the end use processor should add an additional chemical prodegradant to the polypropylene pellets in order to reduce the polymer viscosity to the desired level prior to fibre or film formation. However, there are several disadvantages to this approach:
- the peroxide prodegradants are fire/explosion hazards and require special handling procedures and equipment;
- to be most effective, the peroxide must be uniformly dispersed within the polymer before it decomposes and reacts, otherwise, a polymer with variable viscosity may result in an heterogeneous weight distribution, which makes impossible any transformation of this polymer into fibres; the polymer producer, having access to specialized apparatus and fine reactor flakes rather than pellets, is in a much better position to achieve the required uniform distribution;
- another disadvantage is that the equipment may be damaged by a variable viscosity polymer.

Peroxides are more efficient as prodegradants if well dispersed before reacting. Peroxide added onto the pellets rather than within them acts as a lubricant in extruder feed sections reducing throughput for a given rotation rate.

The processor may also reduce the molecular weight by using very high temperatures to thermally degrade the polypropylene. However, these very high temperatures lead to :
- reduced equipment life;
- throughput limitations because of quenching restraints;
- excessive energy consumption, and
- additive problems including :
   o excessive additive degradation, requiring the inclusion of more additive to the polymer than is required in the final product;
   o limited range of useable additives, requiring that more expensive or non-optimal additives be used; and
   o die capillaries and pipes and the like plugging because of the degradation products.

It has also been proposed a process comprising several successive steps of degradation of a polypropylene, with initial manufacture of a polymer which is easily pelletized, the resulting pellets when heated thereafter being submitted to an additional degradation, thereby producing a polymer of lower viscosity, which may be suitably converted under the form of film or fibres of high quality.

"As described in British Patent GB-A-2100268, a free radical material , with a half-life time in polypropylene in excess of 1/2 min at 190.5°C, can be used".

However, this type of process is limited by the quantity of prodegradant which can be added.

Moreover, it has been noticed that this type of process creates a very bad distribution of the prodegradant since it is introduced into the polymer just before the granulation step in order to reduce the residence time at high temperature so as to avoid an excessive degradation.

The object of the present invention is to overcome all of these drawbacks.

It is an object of the present invention to provide a process for treating isotactic polypropylene and/or ethylene-propylene copolymers, hereinafter designated as polypropylene, so as to incorporate therein an important amount of thermosensitive agent without substantial degradation thereof during its incorporation.

Another object of the present invention is to provide a process for treating polypropylene which allows to incorporate more than about 10% of prodegradant without degradation thereof.

Still another object of the present invention is to provide a polypropylene containing a substantial amount of prodegradant, having its extrusion properties improved.

The subject of the present invention is thus a process for incorporating a thermosensititive agent into a polypropylene material selected from the group consisting of isotactic polypropylene, ethylene-propylene copolymer and mixtures thereof, said process comprising the steps of :
(i) preparing by extrusion an initial homogeneous blend of said polypropylene material together with from 5% to 65% of atactic polypropylene;
(ii) introducing in the feed hopper of an extruder the blend prepared in step (i) simultaneously with a thermosensitive agent to form an homogeneous blend;
(iii extruding the blend, at a temperature comprise between 130 and 165°C during a residence time in the extruder of about 90 seconds, and then forming it into polypropylene pellets which include the major part of the thermosensitive agent.

Thermosensitive agent means any product that is altered in its structure or properties (i.e. chemically or physically) by exposition to a temperature above a certain limit, more specifically in the present case by exposition to the usual processing temperature for polypropylene.

According to a preferred embodiment, the polypropylene thus obtained according to the process of the present invention comprises a substantial quantity of a prodegradant agent that will degrade during a next extrusion.

A prodegradant, as used in the art, means a precursor of a degradant agent, i.e. a compound that is not a degradant agent by itself but that becomes a degradant agent upon activation.

Unexpectedly it has also been noticed that the polypropylene pellets thus formed enable to manufacture products having improved spinning properties.

According to the process of the present invention, isotactic polypropylene and/or ethylene-propylene copolymer, herein referred to as polypropylene, are blended with atactic polypropylene.

It is understood that polypropylene may already contain an initial amount of atactic polymer.

Polypropylene is introduced into an extruder, together with an amount of atactic polypropylene of from 5 to 65% by weight, said amount taking into account any amount of atactic polypropylene already present.

Generally, this blend is carried out in one step at a temperature of from 180°C to 240°C, and a perfectly homogeneous blend is obtained.

In order to avoid the formation of an excessively fluid product, it is not advisable to use more than 65% by weight of atactic polypropylene, and particularly not more than 50% by weight in order to limit the melt index to a value of about 200 g/10 min, preferably to about 100 g/10 min (ASTM D-1238-85; manual procedure using 190°C/2.16 kg).

The blend is then introduced into an extruder heated according to a temperature profile of 130°C to 165°C, together with a prodegradant product having a half-life time of at least 1 min at 170°C.

Generally, this prodegradant product will be selected in view of the polypropylene used, and usually will have a half-life time comprised between 1 and 5 min at 170°C.

Such prodegradants include, by way of example and not limitation, the following : 2,5-dimethyl-2,5-bis(t-butylperoxy)-hexyne-3 and 4-methyl-4-t-butylperoxy-2-pentanone (e.g. Lupersol™ 130 and Lupersol™ 120 available from Lucidol Division, Penwalt Corporation), 3,6,6,9,9-pentamethyl-3-(ethyl acetate)-1,2,4,5-textraoxycyclononane (e.g. USP-138 from Witco Chemical Corporation), 2,5-dimethyl-2,5-bis-(t-butylperoxy)-hexane (e.g. Lupersol 101) and 1-3-bis-(tert-butylperoxy-isopropyl)-benzene (known as Vulcup R, from Hercules, Inc.).

It is understood that the process of the present invention may also be applied to the introduction of other agents which thermally degrade, as for instance to the introduction of up to 20 wt%, based on the weight of polypropylene, of blowing agents (e.g. azodicarbonamide or mixtures of citric acid and sodium bicarbonate) or of up to 80 wt%, based on the weight of polypropylene, of fire-retardant agents (e.g. hexabromocyclododecane, 2,3-dibromopropyl pentabromophenol ether or tetrabromobisphenol A bis(2,3-dibromopropylether)).

According to the process of the invention it has been found that up to 20% based on the weight of polypropylene of these prodegradant agents may be incorporated into the polymer, without any major drawback on the degradation of said agents. It has also been found that these agents may be directly introduced into the blend of isotactic and atactic polypropylene, in other words, at the beginning of the extrusion, with as consequence a significant improvement of the dispersion and homogeneity of the final blend, while not increasing the degradation rate of the prodegradant agent. The extrusion of the polymer together with the prodegradant agent is carried out at a temperature comprised between 130 and 165°C that enables to avoid a strong degradation of the products even with residence time of about 90 seconds in the extruder.

The extrusion of this blend may even be carried out in several passes without having a major influence on the degradation of the product. It is even advisable to carry out the extrusion in several passes if the amount of prodegradant agent to be introduced exceeds about 10% by weight.

At the outlet of the extruder, the blend is passed through the die and then into the pelletizer to recover the pellets of polypropylene filled with substantial amounts of prodegradant agents.

The product thus obtained may also be extruded in admixture with amounts of polypropylene (as herein defined) in order to adjust to the desired amount of prodegradant agent is view of its end-use.

The Applicant has also found that the products obtained in accordance with the present invention, whether or not extruded in admixture with polypropylene, have significantly improved spinning properties, and this is probably due to the better dispersion of the prodegradant agents.

Particularly, it is possible to obtain in one step, by degradation of pellets of high viscosity, a material of very low viscosity, having a very narrow molecular weight distribution and a high homogeneity, for the production of ultrafine fibres. Such a production is not possible with a classical process using pellets, the viscosity of which being so low that it is impossible to correctly pelletize them.

Another application of the present invention consists of blending lower amounts of the product obtained with the invention, with isotactic polypropylene, to produce yarn having low denier at very high speed. Here too, the very good dispersion of the prodegradant agents within the isotactic polypropylene is of major importance and is obtained by the suitable dispersion in situ of the prodegradant agents.

When the process of the invention is applied to the incorporation of a thermosensitive fire-retardant agent, or of a thermosensitive blowing agent, pellets are obtained which are mainly used as master batch in the extrusion of polypropylene.

The following examples are given to better illustrate the process of the invention, but without limiting its scope.

### Example 1

A blend was prepared comprising atactic polypropylene having a viscosity of 0.5 Pa.s at 180°C and isotactic polypropylene having a melt flow index of 2.6 g/10 min. Melt flow index values reported herein were determined using the standard procedure ASTM-D-1238-85 (manual procedure in condition 190°C/2.16 kg, except as otherwise stated).

This blend contained 70% of isotactic polypropylene and was obtained by extrusion in a one screw extruder of 114 mm diameter.

The temperature profile in the extruder ranged between 190°C and 220°C. The polymer obtained had a melt flow index of 12 g/10 min.

This blend was introduced into an extruder of 90 mm diameter and having three heating zones, together with a peroxide of the type 1,3-bis-(tert-butylperoxyisopropyl)-benzene, having a half-life time of 2.5 min at 170°C.

The temperature profile was 150-156-148-132°C and the flow rate was 96 kg/hour. The residence time was 90 seconds.

The blend nominally contained 10.7% by weight of peroxide, and was obtained by carrying out a double pass in the extruder.

After analysis of the polypropylene pellets, it was determined that 9.5% of the peroxide was present in the blend under its active form.

### Example 2

A blend was prepared comprising atactic polypropylene having a viscosity of 0.5 Pa.s at 180°C and isotactic polypropylene having a melt flow index of 2.6 g/10 min.

This blend contained 70% of isotactic polypropylene and was obtained by extrusion in a one screw extruder of 114 mm diameter.

The temperature profile in the extruder ranged between 190°C and 220°C. The polymer obtained had a melt flow index of 12 g/10 min.

This blend was introduced into an extruder of 90 mm diameter and having three heating zones, together with a peroxide of the type 1,3-bis-(tert-butylperoxyisopropyl)-benzene, having a half-life time of 2.5 min at 170°C.

The temperature profile was 150-156-148-132°C and the flow rate was 96 kg/hour. The residence time was 90 seconds.

The blend nominally contained 14.7% by weight of peroxide, and was obtained by carrying out a double pass in the extruder.

After analysis of the polypropylene pellets, it was determined that 13.5% of the peroxide was present in the blend under its active form.

### Comparative example

Isotactic polypropylene having a melt flow index of 25 g/10 min was used.

This polymer was introduced into the feed hopper of an extruder having 90 min diameter, together with a peroxide of the type 1,3-bis(tert-butylperoxyisopropyl)-benzene, having a half-life time of 2.5 min at 170°C.

The temperature profile in the extruder was 150-182-176-160-164°C. The flow rate was 115 kg/hour. The residence time was 75 seconds. The nominal amount of peroxide introduced was 5%. However, it was impossible to pursue the extrusion because the material came out of the die expanded and white due to partial degradation of the peroxide. It was also observed after some time, an important self-heating in the extruder and a much more important degradation of the peroxide.

Moreover, in the polymer formed, it was determined that only 1.5% of the peroxide was still present under its active form.

The experiment was repeated, but this time trying to introduce the peroxide directly before the extruder die. The dispersion was bad and moreover the product obtained had an active peroxide content of 2.8% only.

### Example 3

A blend was prepared comprising atactic polypropylene having a viscosity of 1500 Pa.s at 180°C and isotactic polypropylene having a melt flow index of 2.6 kg/10 min.

This blend contained 50% of isotactic polypropylene and was obtained by extrusion in a one screw extruder of 114 mm diameter.

The temperature profile into the extruder was spread between 220-200-220°C. The polymer obtained had a melt flow index of 10 g/10 min.

The flow rate of the extruder was 250 kg/hour.

This blend was introduced into an extruder of 90 mm diameter and having three heating zones, together with a peroxide of the type 1,3-bis-(tert-butylperoxyisopropyl)-benzene, having a half-life time of 2.5 min at 170°C.

The temperature profile was 150-156-148-132°C and the flow rate was 96 kg/hour. The residence time was 90 seconds.

The blend nominally contained 10.7% by weight of peroxide, and was obtained by carrying out a double pass in the extruder.

After analysis of the polypropylene pellets, it was determined that 9.5% of the peroxide was present in the blend under its active form.

### Example 4

A blend formed with 2.5 part of the blend polypropylene and peroxide prepared as in Example 1, with 97.5 part of isotactic polypropylene having a melt flow index of 12 g/10 min at 230°C/2.16 kg, was extruded on a line devoted to the production of ultrafine fibres (usually called melt-blown fibres).

The blend was extruded according to a temperature profile of from 220°C to 300°C, enabling to produce remarkably stable micro-fibres having a melt flow index higher than 200, at 177°C/2.16 kg. In addition to the high regularity of fibres produced, it was unexpectedly noted that the flow rate obtained with the blend is higher by more than 10% with regard to the best flow rate obtained by using a blend of the same isotactic polypropylene with the same amount of the same peroxide.

The same surprising results were obtained by using the blend of isotactic polypropylene, atactic polypropylene and peroxide described in Example 3.

## Claims

1. A process for incorporating a thermosensitive agent into a polypropylene material selected from the group consisting of isotactic polypropylene, ethylene-propylene copolymer and mixtures thereof, said process comprising the steps of :
(i) preparing by extrusion an initial homogeneous blend of said polypropylene material together with from 5% to 65% of atactic polypropylene;
(ii) introducing in the feed hopper of an extruder the blend prepared in step (i) simultaneously with a thermosensitive agent to form an homogeneous blend;
(iii) extruding the blend, at a temperature comprise between 130 and 165°C during a residence time in the extruder of about 90 seconds, and then forming it into polypropylene pellets which include the major part of the thermosensitive agent.

2. Process according to Claim 1, wherein the initial homogeneous blend comprises from 5 to 50% of atactic polypropylene.

3. Process according to either of Claims 1 or 2, wherein the thermosensitive agent is a prodegradant agent having a half-life time comprised between 1 and 5 minutes at 170°C.

4. Process according to Claim 3 which consists of using a prodegradant agent introduced in an amount of from 0,01 to 20% by weight based on the total weight of polymer.

5. Process according to Claim 4 which consists of introducing simultaneously the homogeneous blend of polypropylene and atactic polypropylene with an amount of prodegradant agent comprised between 10 to 20% by weight based on the total weight of polymers.

6. Process according to Claim 3, wherein the prodegradant agent is selected from the group comprising 2,5-dimethyl-2,5-bis-(tert-butylperoxy)-hexyne-3 and 3,6,6,9,9-pentamethyl-3-(ethyl acetate)-1,2,4,5-tetraoxycyclononane.

7. Polypropylene pellets obtained in accordance with the process described in any one of the preceding claims and containing an amount of thermosensitive agent of at least 9.5% by weight based on the weight of polymers.

## Patentansprüche

1. Verfahren zum Einarbeiten eines temperaturempfindlichen Mittels in ein Polypropylenmaterial, ausgewählt aus der Gruppe bestehend aus isotaktischem Polypropylen, Ethylen-Propylen-Copolymer und deren Mischungen, wobei das Verfahren die Stufen umfaßt:
(i) Herstellen einer anfänglich homogenen Mischung des Polypropylenmaterials zusammen mit 5% bis 65% ataktischem Polypropylen durch Extrudieren;
(ii) Einführen der in Stufe (i) zubereiteten Mischung gleichzeitig mit einem temperaturempfindlichen Mittel in den Zufuhrtrichter eines Extruders zur Bildung einer homogenen Mischung;
(iii)Extrudieren der Mischung bei einer Temperatur zwischen 130 und 165°C während einer Aufenthaltszeit im Extruder von etwa 90 Sekunden und dann Formen derselben zu Polypropylenpellets, die den Hauptteil des temperaturempfindlichen Mittels einschließen.

2. Verfahren nach Anspruch 1, worin die anfänglich homogene Mischung von 5 bis 50% ataktisches Polypropylen umfaßt.

3. Verfahren nach Anspruch 1 oder 2, worin das temperaturempfindliche Mittel ein Vorläufer eines Abbaumittels mit einer Halbwertzeit zwischen 1 und 5 Minuten bei 170°C ist.

4. Verfahren nach Anspruch 3, das in der Verwendung eines Vorläufers eines Abbaumittels besteht, der in einer Menge von 0,01 bis 20 Gew.-%, bezogen auf das Gesamtgewicht des Polymers, eingeführt wird.

5. Verfahren nach Anspruch 4, das aus der gleichzeitigen Einführung der homogenen Mischung aus Polypropylen und ataktischem Polypropylen mit einer Menge des Vorläufers des Abbaumittels besteht, die zwischen 10 und 20 Gew.-%, bezogen auf das Gesamtgewicht der Polymeren, umfaßt.

6. Verfahren nach Anspruch 3, worin der Vorläufer des Abbaumittels ausgewählt ist aus der Gruppe umfassend 2,5-Dimethyl-2,5-bis-(tert-butylperoxy)-hexin-3 und 3,6,6,9,9-Pentamethyl-3-(ethylacetat)-1,2,4,5-tetraoxycyclononan.

7. Polypropylenpellets, erhalten gemäß dem Verfahren, das in einem der vorhergehenden Ansprüche beschrieben ist und die eine Menge temperaturempfindliches Mittel von mindestens 9,5 Gew.-%, bezogen auf das Gewicht der Polymeren, enthalten.

## Revendications

1. Un procédé pour incorporer un agent thermosensible à un matériau en polypropylène choisi parmi le groupe comprenant un polypropylène isotactique, un copolymère éthylène-propylène et leurs mélanges, ce procédé comprenant les étapes de :
(i) préparation par extrusion d'un mélange homogène initial de ce matériau en polypropylène avec de 5% à 65% de polypropylène atactique;
(ii) introduction simultanée dans la trémie d'alimentation d'une extrudeuse du mélange préparé à l'étape (i) avec un agent thermosensible pour former un mélange homogène;
(iii) extrusion du mélange, à une température comprise entre 130 et 165°C pendant un temps de séjour dans l'extrudeuse d'environ 90 secondes, et ensuite mise en forme du mélange en granules de polypropylène qui contiennent la plus grande partie de l'agent thermosensible.

2. Procédé selon la revendication 1 où le mélange homogène initial comprend de 5 à 50% de polypropylène atactique.

3. Procédé selon l'une quelconque des revendications 1 ou 2, où l'agent thermosensible est un agent prodégradant ayant une durée de demi-vie comprise entre 1 et 5 minutes à 170°C.

4. Procédé selon la revendication 3 qui consiste en l'utilisation d'un agent prodégradant introduit en une quantité allant de 0,01 à 20% en poids basés sur le poids total du polymère.

5. Procédé selon la revendication 4 qui consiste en l'introduction simultanée du mélange homogène de polypropylène et de polypropylène atactique avec une quantité d'agent prodégradant comprise entre 10 et 20% en poids basés sur le poids total en polymères.

6. Procédé selon la revendication 3 où l'agent prodégradant est choisi parmi le groupe comprenant 2,5-diméthyl-2,5-bis-(tert-butylperoxy)-hexyne-3 et 3,6,6,9,9-pentaméthyl-3-(éthylacétate)-1,2,4,5-tétraoxy-cyclononane.

7. Des granules de polypropylène obtenus selon le procédé décrit dans l'une quelconque des précédentes revendications et contenant une quantité d'agent thermosensible d'au moins 9,5% en poids basés sur le poids en polymères.
